(19) Europäisches Patentamt

European Patent Office

Office européen des brevets

(11) **EP 1 424 865 A1**

(12) **EUROPEAN PATENT APPLICATION**

(43) Date of publication:
**02.06.2004 Bulletin 2004/23**

(51) Int Cl.[7]: **H04Q 7/38**

(21) Application number: **02425739.6**

(22) Date of filing: **29.11.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **Siemens Mobile Communications S.p.A.**<br>**20126 Milano (IT)** | (72) Inventors:<br>• **Laghigna, Massimo**<br>  **27029 Vigevano (PV) (IT)**<br>• **Montanari, Fabio**<br>  **20080 Basiglio (MI) (IT)** |

(54) **Method of and device for resource allocation in digital cellular communication systems**

(57)    In a digital cellular communications system with priority-based dynamic channel allocation, at least for resources that are to be reserved for a relatively long time to communications, in particular to packet communications, the allocation procedure comprises a phase of resource selection comprising the steps of: comparing the priority with a first threshold; calculating a parameter representative of the variability of the priority over a plurality updating intervals and comparing said parameter with a second threshold; and permitting allocation of idle resources, and sharing or reuse of resources already in use in the cell, depending on whether the priority and its variability meet predetermined criteria.

START

i = 0

Read priority $P_{TSi}(t)$;
Compute $|<P'_{TS}(t)>|$

$P_{TS}(t_N) \geq MinXXPriority?$ — no

yes

$|<P'_{TS}(t)>| \leq \varepsilon$ — no

yes

Store timeslot TSi with flag "no resource reuse/ sharing allowed"

Store timeslot TSi with flag "resource reuse/sharing allowed"

INC i

i > Max? — no

yes

END

FIG 2

EP 1 424 865 A1

**Description**

FIELD OF THE INVENTION

The present invention refers to digital cellular communications systems, and more particularly it concerns a method of and a device for resource allocation in one such system.

Preferably, but not exclusively, the invention is applied to resource allocation to packet communication services, more particularly in systems using TD-SCDMA (time division - synchronous code division multiple access) techniques.

BACKGROUND OF THE INVENTION

In digital cellular telecommunications systems, mobile stations communicate with the system through a radio interface while moving in the area served by the system. In particular, the mobile stations transmit and receive radio signals to and respectively from base stations controlling each a portion of said area (a so-called "cell").

In digital cellular systems, the radio signals between the mobile stations and the transceivers of the cells are generally transmitted by using combined frequency division - time division multiple access techniques. In third generation systems moreover a code division multiple access is used for allowing a plurality of communications share a same time slot of a given carrier. Each communication is thus allotted a number of channels each comprising a particular carrier and time slot combination for GSM and a frequency/time slot/code combination for a third generation system. Different carriers or different time slots can be used for downlink and uplink communication.

The radio resources in cellular communications systems are limited, like in any radio communication system, and therefore a same carrier frequency can be allotted to different cells, according to rules depending on the kind of cellular system. Use of the same frequency by different mobile stations can result in interference among the respective signals when the stations are sufficiently close to one another. Moreover, the signals can be subjected to other kinds of distortion, affecting their quality. In order to be allocable to a communication, a channel must meet certain quality and interference criteria. Since the channel conditions vary in time and with the mobile station position, it is customary to allocate resources according to a dynamic process, generally based on measurements of the interference and/or carrier-to-interference ratio carried out by both the mobile station and the base stations when a communication is to be set up and during communication.

Several methods of dynamic allocation are known. For instance, US-A 5,956,642 discloses a method and a system that directly exploits the measurement of interference and carrier-to-interference ratio. Other systems exploit the so-called "priority", which is a parameter representative of the probability that, in a certain channel in a cell, the interference generated by other cells or frequencies is below a given threshold. Example of the latter systems are disclosed in the document "Channel Segregation, a distributed Adaptive Channel Allocation Scheme for Mobile Communication Systems", by Y. Furuya and Y. Akaiwa, IEICE Transactions, Vol. E 74, No. 6, June 1991, pp 1531-1537, and in EP-A 1 198 964.

In the TD-SCDMA system, to which the invention has its preferred application, the priority based dynamic channel allocation (DCA) has been introduced in order to:

- make adjacent cells achieve in a dynamic and adaptive way a splitting (or segregation) of the radio channels they use to serve users located in mutually interfered areas (Channel Assignment to cells). The splitting tends to assign channels to adjacent cells proportionally to the offered traffic and allows a cell to use the less interfered time slots;
- make the same radio channels be reused by adjacent cells to serve users located in areas not affected by inter-cell interference (Channel Selection).

Channel assignment comprises two basic processes: the priority updating process, performed by the TD-SCDMA Base Transceiver Station (BTSC), and the priority based Admission Control (priority based AC), performed by the Radio Network Controller (RNC). More particularly, the BTSC continuously calculates the priority values for each time slot in uplink (UL) and downlink (DL) direction, e. g. according to any of the iterative formulae disclosed in the above mentioned EP-A 1 198 964, and periodically sends the updated priority values to the RNC. The RNC stores these results and uses them whenever the priority based AC is performed. The latter procedure verifies which time slots have a priority value higher than minimum UL or DL priority thresholds, set by the Operation & Maintenance (O&M) function. Only the timeslots that pass this check will be considered assigned to the cell and will be taken into account by the channel selection part of the DCA.

Since the channel assignment summarised above is a slow process, it cannot guarantee that no parallel use of the same radio channel by adjacent cells occurs to serve users located in mutually interfered areas. Thus, a further process is required to perform this check. This further process is the signal-to-interference ratio (SIR) based admission control, which is a dynamic algorithm that runs at the assignment time to forbid (allow) the use of a certain frequency and timeslot when it is (is not) reused at low distance by an adjacent cell. That algorithm is based on the interference a user experiences on the radio channels at the allocation time.

Channel Selection, which is the fast part of the DCA, allocates and redistributes the resources among the channels assigned to a cell by the channel assignment process, again according to a priority based criterion.

Finally, the Resource Selection part of DCA selects the spreading codes and the midamble shifts to be used to provide the total number of resource units (RU) the channel selection has required for a certain radio channel in order to allocate a service on that channel.

The DCA is performed each time a user requests a communication service to the network, independently from the kind of the service. Two kinds of service, a circuit switched service (data or speech) or a packet data service can be requested by a TD-SCDMA user. In case of packet service, the resources allocated to a packet user could be shared or reused, in case of need, by other packet users. Two DCA procedures manage the packet resources allocation: the Channel Selection and the Scheduling.

Channel selection, as mentioned above, tends to select the time slots with the highest priority value and is generally based on a punctual time slot priority value (the last one received by the BTSC). The second procedure shares or reuses the resources, already selected by the previous procedure, among different packet users according to a criterion based on bit rate matters. This could worsen the DCA efficiency.

Indeed, the resources for packet communications are reserved to such communications for relatively long times. Using a punctual time slot priority value for channel selection does not guarantee that the channel quality and/or interference remains acceptable during a communication. This can lead to a degradation of the transmission, with the consequent need for frequent packet retransmission that strongly reduces the actual bit rate and is therefore detrimental to an efficient exploitation of the resources. The risk of degradation is even stronger in the resource sharing or reuse managed by the scheduler, where interference is not at all taken into account, since resources can be allocated in time slots below the priority threshold.

Thus, there is the need of an allocation procedure that, especially for packet communication, avoids the above-mentioned risks of degradation.

SUMMARY OF THE INVENTION

This aim is achieved by the method and the device according to the invention, which are based on keeping trace, in each cell, of the history of the priority of each channel and hence on predicting the future behaviour of the channel. Indeed, apart from sudden and unpredictable events, there is no reason why the behaviour of the channel should exhibit, over a finite number of future priority measurement periods, macroscopic variations with respect to the behaviour it had during a number of previous priority measurement periods.

The invention is defined in claim 1, as far as the method is concerned, and in claim 12, as far as the device is concerned. Preferred features are disclosed in the dependent claims 2 to 11 and 13 to 20.

The invention concerns also a digital cellular system, in which the dynamic allocation includes a resource selection carried out by the method and the device of the invention.

The invention can be applied both in the channel selection process and in the resource sharing or reuse process. In the first case, it is possible to predict which time slots available for the allocation of an incoming packet service request will not be (will be) below the priority threshold exploited by the priority based admission control in order to allow (forbid) the selection of resources on this time slot. In the second case, it is possible to predict which time slots, whose RUs are already assigned to an active packet service, will not be (will be) below the priority threshold in order to allow (forbid) the sharing/re-use of these resources.

Being the algorithm based on the time slots priority values, it will be triggered each time new time slot priority values are available at the RNC.

BRIEF DESCRIPTION OF THE DRAWINGS

The invention will be better understood from the following description of a preferred embodiment, with reference to the accompanying drawings, in which:

- Fig. 1 is a schematic representation of a cell of cellular system including the apparatus for performing the method of the invention;
- Fig. 2 is a flow chart of the method of the invention;
- Fig. 3 is a graph of the priority, considered a continuous function of time; and
- Fig. 4 is a graph of the priority versus time for two different time slots, in which priority is shown as a succession of discrete values.

DESCRIPTION OF THE PREFERRED EMBODIMENT

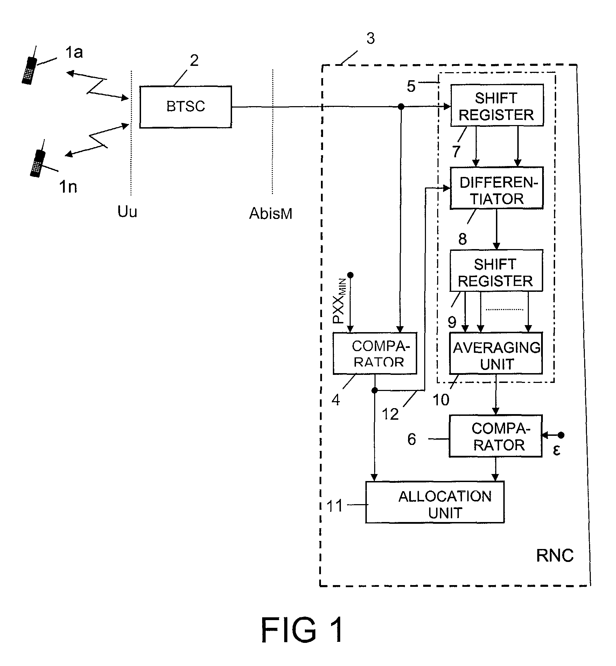

Referring to Fig. 1, a cell of a TD-SCDMA system is schematically represented. There, a number of mobile stations 1a...1n send and receive radio signals to and from a TD-SCDMA base transceiver station (BTSC) 2 over the radio interface Uu. Besides the information signals relevant to a communication in progress, the mobile stations send to the BTSC 2 results of quality and interference measurements carried out on specific downlink channels. Such measurements are performed both when a service (circuit switched or packet communication) is requested and periodically, during the communication. Other measurements of the same kind are performed by the BTSC itself for all frequencies and all time slots. Based upon such measurements, the BTSC 2 calculates the priority allotted to each time slot for each frequency, for both the uplink and the downlink direction.

At each updating period, the priority values so calculated are passed by the BTSC 2 to the Radio Network Controller (RNC) 3 through the so-called AbisM interface, and are received by the processing units in charge of the dynamic channel allocation, of which the device of the invention is part.

In particular, the priority values are fed to a first comparator 4 and to a block 5, described below, that obtains from the priority a second parameter also taken into account by the algorithm according to the invention.

Comparator 4 has to compare the priority values it receives with a threshold in order to check whether the condition

$$P_{TS}(t_N) \geq PXX_{MIN} \tag{1}$$

is met, where:

- $P_{TS}(t_N)$ is the priority value of timeslot TS at time $t_N$;
- $PXX_{MIN}$ (where XX stands for UL or DL depending on whether TS is an uplink or a downlink time slot, respectively) are the minimum priorities considered acceptable by the priority based admission control in order to allot the uplink or downlink time slot, respectively, to the cell.

Block 5 is to calculate a parameter related with the variability of the priority, in particular the absolute value of the average value of the derivative $P'_{TS}(t)$ of priority function $P_{TS}(t)$. As known, such value is given by relation:

$$< P'_{TS}(t) > = \lim_{T \to \infty} \frac{1}{T} \int_T P'_{TS}(t)\, dt \tag{2}$$

It should be noted that the limit in that formula is a converging one because the $P'_{TS}(t)$ is a well-defined energy signal. Block 5 provides the absolute value to a second comparator 6, which is to check whether the condition

$$|<P'_{TS}(t)>| \leq \varepsilon \tag{3}$$

is met, where $\varepsilon$ is an arbitrarily small quantity, whose value is set by the O&M.

Inequality (1) means that the priority value of the timeslot TS at time $t_N$ passes the priority based admission control, and inequality (3) means that the function $P_{TS}(t)$ has small variations until the time $t_N$. Meeting both conditions guarantees a high probability that the priority value of the timeslot TS will remain above the threshold $PXX_{MIN}$ for a reasonably long time and thus is actually suitable for a packet communication. This assumption is the core of the predictive algorithm.

Depending on the combined results of the checks on the two conditions the following actions can be taken by the decision unit:

1) $P_{TS}(t_N) \geq PXX_{MIN}$ & $|<P'_{TS}(t)>| \leq \varepsilon$
The timeslot TS has a current priority higher than $PXX_{MIN}$ and it is expected to stay higher also at the next priority updating. Under such conditions, the DCA enables the sharing/reuse of all the resources belonging to the time slot and also the allocation of new resources on the same timeslot.

2) $P_{TS}(t_N) \geq PXX_{MIN}$ & $|<P'_{TS}(t)> I > \varepsilon$
The timeslot TS passes the priority based AC but its priority is about to fall under the threshold $PXX_{MIN}$ (i.e.

the timeslot is expected not to pass priority based AC at the next priority updating). The DCA will forbid the sharing/reuse of all the resources belonging to the time slot whereas it will allow the allocation of new resources on the same time slot, if case 1 does not occur for any time slot of the serving cell.

3) $P_{TS}(t_N) < PXX_{MIN}$

The time slot TS does not pass the priority based AC and therefore the DCA will forbid both the sharing/reuse of all the resources belonging to the time slot and the allocation of new resources on the same time slot.

The actual allocation of the resources selected by the algorithm to the communications will then be carried out as required by the specific dynamic channel allocation method used in the system (for instance, taking into account the path loss, in the case of the system disclosed in the above mentioned EP-A1 198 964).

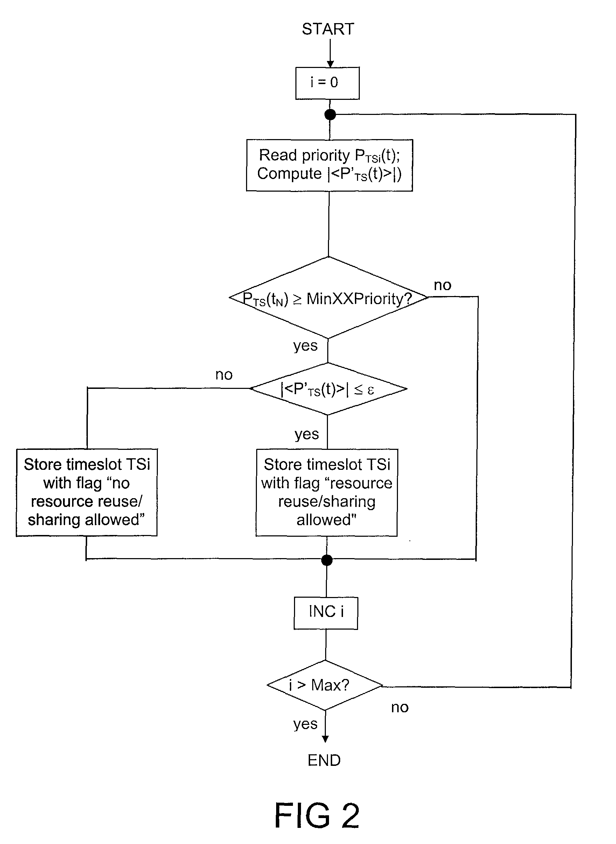

The above algorithm is also shown in the flow chart of Fig. 2, for all time slots TSi of a carrier. In view of the preceding description, the flow chart is self-explaining. It is only to be noted that the expression "Store time slot TSi" correspond to the expression "enabling allocation of new resources on the time slot" used in this specification.

In the practical implementation, it is to be considered that $P_{TS}(t)$ is a discrete function at RNC side. To calculate $P'_{TS}(t)$ at the generic time $t_i$ the Finite Differences Method can be used. The following well-known relations then apply:

$$P'_{TS}(t_i) = \lim_{t \to t_i} \frac{P_{TS}(t) - P_{TS}(t_i)}{t - t_i} \approx \frac{P_{TS}(t_i) - P_{TS}(t_{i-1})}{t_i - t_{i-1}} = \frac{P_{TS}(t_i) - P_{TS}(t_{i-1})}{PriorityUpdatePeriodXX} \qquad (3)$$

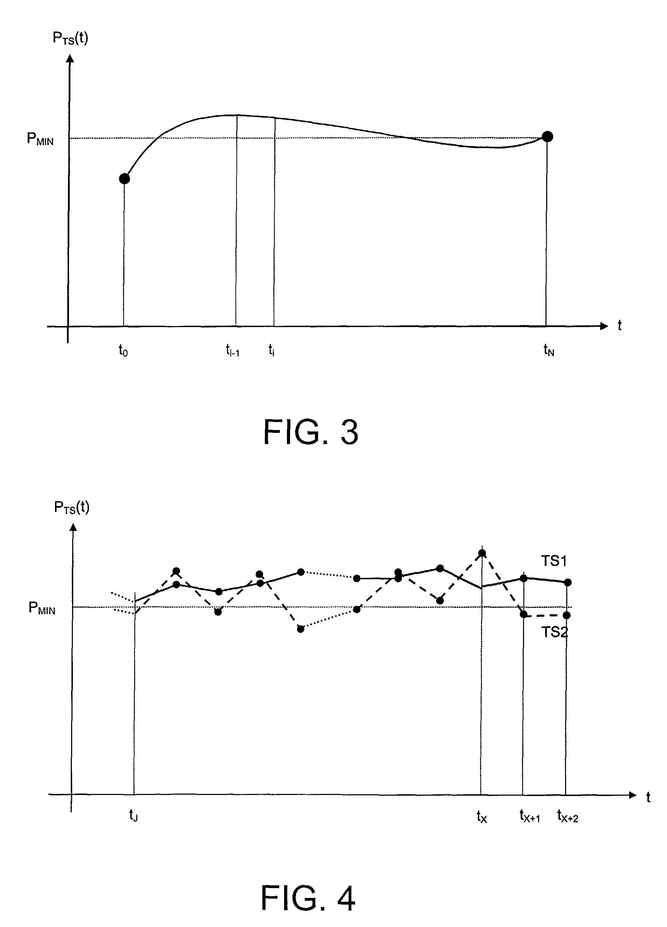

where (see also Fig. 3):

- $t_i$ is a time instant at which the updated priority value is received at the RNC 3 from the BTSC 2;
- PriorityUpdatePeriodXX (where XX again stands for UL or DL) specifies the periodicity used by the BTSC 2 to send the updated values to the RNC 3. Also such periodicity may be different for uplink and downlink time slots. The periodicity will be set according to criteria set forth below.

Thus, coming back to Fig. 1, block 5 comprises a two-position shift register 7 which is serially written and read in parallel and, at every updating period, sends values $P_{TS}(t_i)$ and $P_{TS}(t_{i-1})$ to differentiator block 8 that computes the derivative according to relation 3. Differentiator 8 can be enabled by comparator 4 when the output signal of the latter indicate that threshold $PXX_{MIN}$ is exceeded, as indicated by connection 12. Value $P'_{TS}(t_i)$ of the derivative is then fed by differentiator 8 to a second shift register 9, also serially written and read in parallel, which has as many positions as are the updating periods over which the average is to be calculated. The values stored in shift register 9 are sent to unit 10 that calculates the average value of the derivative over the desired time interval $[t_0, t_{N-1}]$ according to relation

$$<P'_{TS}(t)> = \sum_{i=0}^{N-1} \frac{P_{TS}(t_i) - P_{TS}(t_{i-1})}{PriorityUpdatePeriodXX} \qquad (4)$$

and extracts the absolute value of $<P'_{TS}(t_i)>$.

The priority updating period is an important factor for the invention. In known systems, the periodical interference measurements (from which priority is obtained) are carried out every 1 to 255 ms. Now, the shorter the updating period, the higher the accuracy of the derivative computation. Yet, short updating periods entail a lot of signalling traffic between BTSC and RNC for transmitting the updated values. Moreover, for a given number N of periods considered for evaluating the derivative, the shorter the updating period, the shorter the history of the priority and then the less accurate the "prediction" of the future behaviour of the channel. Thus, the choice of the updating period by the O&M will be a trade off between length of the history and accuracy of the calculations. The number N will be consequently set as a trade off between length of the history and size of the buffers for storing the priority values.

The signals indicating whether inequalities 1 and 3 are met are fed by comparators 4 and 6 to unit 11, which associates the time slots with a flag indicating the result of the algorithm and allocates the resources according to the specific rules of the system.

For simplicity of the drawing, the timing signals have not been indicated; on the other hand they are not necessary for the understanding of the invention. Note also that the above-described circuitry is shown for a single time slot. However the skilled in the art will have no difficulty in adapting it to operate on all time slots of all frequencies in the cell.

In order to facilitate understanding of the principles of the invention, reference is also made to the diagram of Fig. 4. There, the priority versus time behaviour of two time slots TS1 (in solid line) and TS2 (in dashed line) is shown together with the acceptance threshold $P_{MIN}$. Instant $t_X$ denotes the instant at which the decision is to be taken about the possibility of allocation or sharing/reuse of resources, respectively, in those time slots. At instant $t_X$ both time slots TS1 and TS2 have priorities above the threshold, and TS2 has a higher priority than TS1. Thus, according to the conventional techniques of priority-based dynamic allocation, resources would be allocated in time slot TS2. Yet, looking at the history of the time slots in the interval $t_J$ to $t_X$, it can be seen that the priority of TS2 exhibits oscillations that occasionally bring it under the threshold, whereas TS1 has a smoother behaviour and always remain above the threshold. Thus, taking into account that such behaviour is likely to be maintained also in the future, as shown for the two subsequent periods $t_X - t_{X+1}$ and $t_{X+1} - t_{X+2}$, according to the invention the resources will be allocated in TS1, not in TS2.

It is clear that the above description has been given only by way of non-limiting example and that variations and modifications are possible without departing from the scope of the invention.

In particular, the present description has implicitly assumed that all users active in a time slot experience the same interference even if they are allotted different codes. Of course, the same method could be employed at the code level, instead of at time slot level.

Moreover, even if the preferred application is to packet service, in which the resources are engaged for relatively long time, the invention can be applied also to circuit-switched services. In such case use of the invention may reduce the probability of handovers that, as known, represent a cost for the system.

Further, even if priority has been considered, the actual measured interference and/or quality levels or any other parameter obtained from the measurements could be employed. Use of priority has the advantage that it is obtained from measurements carried out on all mobile stations, whereas an interference level relates to a single station. This ensures that actually a resource may be shared among different users without problems.

Still further, even if the invention has been disclosed in connection with a TD-SCDMA system, the same idea may be applied to any other cellular communication having a dynamic channel allocation based on a continuous measurement of the interference carried out for both directions of communications and for all users, including those in idle state.

**Claims**

1. A method of selecting, in a station controller (3) of a digital cellular communications system, communication resources to be used by said controller (3) in a process of dynamic channel allocation in a controlled cell, said allocation exploiting periodically updated values of a first parameter ($P_{TS}$) related to interference levels over said resources, **characterised in that** the method comprises:

   - comparing, in a first comparing step, said first parameter ($P_{TS}$) with a first threshold ($PXX_{MIN}$) ;
   - calculating a second parameter, related with the variability of the value of the first parameter ($P_{TS}$) over a plurality of previous updating intervals of said first parameter ($P_{TS}$) ;
   - comparing, in a second comparing step, said second parameter with a second threshold; and
   - assigning the resources to the cell if the results of said comparisons denote that said first and second parameters meet predetermined criteria.

2. A method as claimed in claim 1, **characterised in that** said first comparing step and said calculating step are carried out at each updating period of said first parameter ($P_{TS}$).

3. A method as claimed in claim 2, **characterised in that** said calculating step is enabled if the first comparing step denotes that the first parameter meets a predetermined criterion.

4. A method as claimed in any of claims 1 to 3, **characterised in that**, for allocation of idle resources, said assigning step comprises:

   a) accepting resources for possible allocation to users of the cell if the comparison of the respective first parameter ($P_{TS}$) with the respective first threshold ($PXX_{MIN}$) is indicative of a low level of interference;
   b) allowing allocation of the accepted resources if the comparison of the respective second parameter with the respective second threshold indicates a low variability of the respective first parameter ($P_{TS}$); and
   c) allowing allocation of the accepted resources if the comparison of the respective second parameter with the respective second threshold indicates a high variability of the first parameter ($P_{TS}$), provided no allocation of resources has been allowed at step b).

**5.** A method as claimed in any of claims 1 to 3, **characterised in that** said resources are resources allotted to a communication service allowing a dynamic sharing or reuse of resources already in use in the cell for a same kind of communication service, and said assigning step comprises:

a) allowing both allocation and sharing/reuse of a resource if the comparison of the respective first parameter ($P_{TS}$) with the respective first threshold ($PXX_{MIN}$) is indicative of a low level of interference and the comparison of the respective second parameter with the respective second threshold indicates a low variability of the first parameter ($P_{TS}$) ;

b) for resources for which the comparison of the respective first parameter ($P_{TS}$) with the respective first threshold ($PXX_{MIN}$) is indicative of a low level of interference and the comparison of the respective second parameter with the respective second threshold indicates a high variability of the first parameter ($P_{TS}$), forbidding sharing or reuse of the resources, but allowing allocation provided no allocation of resources has been allowed at step a);

c) forbidding both the allocation and the sharing or reuse of resources for which the comparison of the respective first parameter ($P_{TS}$) with the respective first threshold ($PXX_{MIN}$) is indicative of a high level of interference.

**6.** A method as claimed in claim 5, **characterised in that** said communication service is a packet communication service.

**7.** A method as claimed in any of claims 1 to 6, **characterised in that** the first parameter ($P_{TS}$) is a priority allotted to the resource based on periodical interference measurements in the cell and representative of the probability that the interference is below a certain threshold, and the second parameter is the absolute value of the average of the derivative of the priority over said plurality of intervals.

**8.** A method as claimed in any claims 1 to 7, **characterised in that** said system is a system employing time-division synchronous code division multiple access TD-SCDMA.

**9.** A method as claimed in claim 8 when referred to claim 7, **characterised in that** it is performed for each time slot for each of the carrier frequencies assigned to a cell.

**10.** A method as claimed in claims 4, 5 and 9, **characterised in that** said assigning step comprises:

- allowing both allocation of new resources in a time slot and, for communications services allowing so, sharing or re-use of resources belonging to the same time slot if said comparing steps indicate that, for said time slot, the priority is higher than the first threshold ($PXX_{MIN}$) and the absolute value of the average is below said second threshold;
- for a time slot for which said comparing steps indicate a priority higher than the first threshold ($PXX_{MIN}$) and an absolute value above said second threshold, allowing allocation of new resources on the time slot, provided no time slot in the cell has an absolute value of the derivative below said second threshold, and forbidding the sharing or re-use, if admitted by the service, of the resources belonging to the time slot;
- forbidding both allocation of new resources in a time slot and the sharing or reuse, if admitted by the service, of allocated resources belonging to that time slot if said first comparing step indicates that the priority is lower than the first threshold ($PXX_{MIN}$).

**11.** A method as claimed in claim 10, **characterised in that** said resources are resources to be allotted to a packet communication service in the radio interface (Uu) and/or in the interface (AbisM) between the transceiver units (2) and the station controllers (3).

**12.** A device for selecting, in a control units (2, 3) of a cell of a digital cellular communications system, communication resources to be used for a process of dynamic channel allocation exploiting a first parameter ($P_{TS}$) related to interference levels, wherein said control units comprise means (2) for periodically computing and updating said first-parameter ($P_{TS}$) and supplying it to means (3) managing the dynamic allocation, **characterised in that** said device (4, 5, 6) is part of said managing means (3) and comprises:

- first comparing means (4) receiving the periodically computed and updated first parameter ($P_{TS}$) and comparing it with a first threshold ($PXX_{MIN}$);
- means (5) for storing the values taken by said first parameter in a plurality of updating intervals and for determining, from the stored values, a second parameter representative of the variability of said first parameter

$(P_{TS})$ over said plurality of updating intervals;
- second comparing means (6) for comparing said second parameter with a second threshold; and
- assigning means (11), connected to said first and second comparing means (4, 6), for assigning a resource to the cell when said first and second comparing means (4, 6) denote that said first and second parameters meet predetermined criteria..

13. A device as claimed in claim 12, **characterised in that** said first comparing means (4) and said storing and determining means (5) are arranged to compare the first parameter $(P_{TS})$ with the first threshold $(PXX_{MIN})$ and to generate the second parameter, respectively, at each updating period of said first parameter $(P_{TS})$.

14. A device as claimed in claim 13, **characterised in that** said storing and determining means (5) are enabled to compute the second parameter if said first comparing means (4) indicate that the first parameter $(P_{TS})$ meets a predetermined criterion.

15. A device as claimed in any of claims 12 to 14, **characterised in that** for selecting idle resources to be used by the cell, the assigning means (11) are arranged to:

a) accept a resource for use in the cell if said first comparator (4) reveals that the first parameter indicates a low interference;
b) allow allocation of an accepted resource to users of the cell if said second comparator (6) reveals that the second parameter indicates a low variability of the first parameter; and
c) allow allocation of an accepted resource to users of the cell if said second comparator (6) reveals that the second parameter indicates a high variability of the first parameter, provided no resource has been assigned at step b).

16. A device as claimed in any of claims 12 to 14, **characterised in that**, for selecting resources to be used by the cell for a communication service allowing sharing or reuse of resources already in use in the cell for the same communication service, the assigning means (11) are arranged to:

a) allow both allocation and sharing or reuse of resources if said first comparing means (4) reveal that the first parameter indicates a low interference, and said second comparing means (6) reveal that the second parameter indicates a low variability of the first parameter;
b) for resources for which said first comparing means (4) reveals that the first parameter indicates a low interference, and said second comparing means (6) reveals that the second parameter indicates a high variability of the first parameter, forbid sharing or reuse and allow allocation if the resources are idle, provided no resource has been assigned at step b).
c) forbid both sharing or reuse and allocation if said first comparing means (4) reveals that the first parameter indicates a low interference;

17. A device as claimed in any of claims 12 to 16, **characterised in that** said computing and updating means (2) are arranged to compute a priority allotted to the resource based on said interference measurements and representative of the probability that the interference is below a certain threshold, and said storing and determining means (5) are arranged to compute the absolute value of the average of the derivative of the priority over said plurality of intervals.

18. A device as claimed in any of claims 12 to 17, **characterised in that** said system is a TD-SCDMA cellular communication system

19. A device as claimed in claim 18 when referred to claim 17, **characterised in that** the said computing and updating means (2) and said determining means (5) are arranged to compute the priority and said absolute value, respectively, for each time slot of the system.

20. A device as claimed in claims 15, 16 and 19, **characterised in that** said assigning means (11) are arranged to:

- enable both the sharing or re-using of all resources belonging to a time slot, and the allocation of new resources on the same time slot, if the first comparing means (4) and the second comparing means (6) indicate that, in said time slot, the priority is higher than the first threshold $(PXX_{MIN})$ and the absolute value is below the second threshold, respectively.

- for a time slot which the first comparing means (4) indicate a priority higher than the first threshold (PXX$_{MIN}$) and the second comparing means (6) indicate an absolute value above said second threshold, forbid sharing or re-using of resources belonging to that time slot, and allow allocation of new resources on the same time slot, provided no other time slot in the cell has an absolute value below the threshold;
- forbidding both allocation of new resource and the sharing or reuse of allocated resources in a time slot, if the first comparing means (4) indicate that, in said time slot, the priority is below the first threshold (PXX$_{MIN}$).

21. A device as claimed in claim 20, **characterised in that** the device (3, 5, 6) is arranged to select time slots to be allotted to a packet communication service in the radio interface (Uu) and/or in the interface (AbisM) between the transceiver units (2) and the station controllers (3).

22. A digital cellular communication system featuring, in each cell, a dynamic channel allocation based on periodical measurements of the interference carried out for all channels, **characterised in that** the resources to be used in a cell for said dynamical channel allocation are selected by a method according to any of claims 1 to 11.

23. A digital cellular communication system comprising, in control units (2, 3) of each cell, means (3) for performing a dynamic channel allocation based on periodical measurements of the interference carried out for all channels, **characterised in that** said means (3) for performing a dynamic channel allocation includes a device (4, 5, 6) for resource selection according to any of claims 12 to 21.

EP 1 424 865 A1

FIG 1

START

i = 0

Read priority $P_{TSi}(t)$;
Compute $|<P'_{TS}(t)>|)$

$P_{TS}(t_N) \geq$ MinXXPriority?

no

yes

$|<P'_{TS}(t)>| \leq \varepsilon$

no

yes

Store timeslot TSi
with flag "no
resource reuse/
sharing allowed"

Store timeslot TSi
with flag "resource
reuse/sharing
allowed"

INC i

i > Max?

no

yes

END

# FIG 2

$P_{TS}(t)$

$P_{MIN}$

$t_0$    $t_{i-1}$  $t_i$                    $t_N$

t

# FIG. 3

$P_{TS}(t)$

$P_{MIN}$

TS1

TS2

$t_J$                              $t_X$  $t_{X+1}$  $t_{X+2}$

t

# FIG. 4

European Patent
Office

**EUROPEAN SEARCH REPORT**

Application Number

EP 02 42 5739

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y,D | WO 01 10155 A (MARGHERITA FULVIO ;SIEMENS INF & COMM NETWORKS (IT); PAROLARI SERG) 8 February 2001 (2001-02-08) * abstract * * page 3, line 18 - page 4, line 22 * * figure 1 * | 1-23 | H04Q7/38 |
| Y | EP 1 204 287 A (MATSUSHITA ELECTRIC IND CO LTD) 8 May 2002 (2002-05-08) * abstract * * column 1, line 19 - column 2, line 11 * * column 5, line 9 - column 7, line 18 * * figures 3,4 * | 1-23 | |
| Y,D | FURUYA Y ET AL: "CHANNEL SEGREGATION, A DISTRIBUTED ADAPTIVE CHANNEL ALLOCATION SCHEME FOR MOBILE COMMUNICATION SYSTEMS" IEICE TRANSACTIONS, INSTITUTE OF ELECTRONICS INFORMATION AND COMM. ENG. TOKYO, JP, vol. E74, no. 6, 1 June 1991 (1991-06-01), pages 1531-1536, XP000262310 ISSN: 0917-1673 * the whole document * | 1-23 | |
| A | US 5 345 597 A (STEER DAVID G ET AL) 6 September 1994 (1994-09-06) * abstract * * column 1, line 34 - line 48 * * column 5, line 14 - column 6, line 2 * * figure 1 * | 1,12,22, 23 | TECHNICAL FIELDS SEARCHED (Int.Cl.7) H04Q |
| A | EP 0 715 479 A (NIPPON TELEGRAPH & TELEPHONE) 5 June 1996 (1996-06-05) * abstract * * column 1, line 57 - column 3, line 48 * * column 9, line 54 - column 10, line 36 * | 1,12,22, 23 | |

The present search report has been drawn up for all claims

| Place of search | Date of completion of the search | Examiner |
|---|---|---|
| MUNICH | 5 February 2003 | Rabe, M |

## ANNEX TO THE EUROPEAN SEARCH REPORT
## ON EUROPEAN PATENT APPLICATION NO.

EP 02 42 5739

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2003

| Patent document cited in search report | | Publication date | Patent family member(s) | | Publication date |
|---|---|---|---|---|---|
| WO 0110155 | A | 08-02-2001 | IT | MI991710 A1 | 30-01-2001 |
| | | | WO | 0110155 A1 | 08-02-2001 |
| | | | EP | 1198964 A1 | 24-04-2002 |
| EP 1204287 | A | 08-05-2002 | AU | 7461901 A | 08-01-2002 |
| | | | EP | 1204287 A1 | 08-05-2002 |
| | | | CN | 1383694 T | 04-12-2002 |
| | | | WO | 0201900 A1 | 03-01-2002 |
| | | | JP | 2002152815 A | 24-05-2002 |
| | | | US | 2002114295 A1 | 22-08-2002 |
| US 5345597 | A | 06-09-1994 | CA | 2027826 A1 | 18-04-1992 |
| | | | GB | 2250665 A ,B | 10-06-1992 |
| EP 0715479 | A | 05-06-1996 | JP | 2991367 B2 | 20-12-1999 |
| | | | JP | 8009456 A | 12-01-1996 |
| | | | EP | 0715479 A1 | 05-06-1996 |
| | | | US | 5708968 A | 13-01-1998 |
| | | | WO | 9535640 A1 | 28-12-1995 |

EPO FORM P0459

For more details about this annex : see Official Journal of the European Patent Office, No. 12/82